# Europäisches Patentamt

## European Patent Office

## Office européen des brevets

(11) Publication number: **0 169 732**
**B1**

(12) **EUROPEAN PATENT SPECIFICATION**

(45) Date of publication of patent specification: **04.10.89**

(21) Application number: **85305244.7**

(22) Date of filing: **23.07.85**

(51) Int. Cl.⁴: **B 60 R 1/04**

(30) Priority: **23.07.84 JP 111268/84 u**
**23.07.84 JP 111269/84 u**
**23.07.84 JP 111270/84 u**
**24.08.84 JP 128089/84**

(43) Date of publication of application:
**29.01.86 Bulletin 86/05**

(45) Publication of the grant of the patent:
**04.10.89 Bulletin 89/40**

(84) Designated Contracting States:
**DE FR GB**

(56) References cited:
**DE-U-7 232 846**
**GB-A-1 231 353**

(54) **A rear view mirror assembly.**

(73) Proprietor: **TOYOTA JIDOSHA KABUSHIKI**
**KAISHA**
**1, Toyota-cho Toyota-shi**
**Aichi-ken 471 (JP)**

(72) Inventor: **Ohyama, Yasuo**
**797 Banchi 1 Kiriyama Shiga-cho**
**Toyota-shi Aichi-ken (JP)**

(74) Representative: **Ben-Nathan, Laurence Albert**
**et al**
**Urquhart-Dykes & Lord 91 Wimpole Street**
**London W1M 8AH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a rear view mirror assembly of a vehicle, and more particularly to a temporary engagement device for installing a unit of the rear view mirror assembly on a body member of a vehicle.

An adjustable device disposed between a base member and a support arm of a rear view mirror is disclosed in Japanese Utility Model Laid-open No. Showa 58-24595. In this Japanese Utility Model Laid-open No. Showa 58-24595, the rear view mirror includes a support arm, a spring and a base member. The base member is cemented on an interior of a windshield, and includes a bar and a mounting portion. The spring includes a hooked end and a rear edge, and the hooked end being mounted on the bar of the base member. The rear edge of the spring is disposed on the mounting portion, and the support arm is fixed on the spring by a bolt.

Further, the base member includes a slanted surface on a bottom surface thereof and the support arm includes an incline on an end thereof. As shown in Fig. 12 of Japanese Utility Model Laid-open No. Showa 58-24595, when a force "Pc" is applied to the rear view mirror, the support arm is moved downwardly by a component force "$P_2$" of the force "$P_c$" and breaks away, because the incline of the support arm and the slant surface of the base member prevent the support arm from resisting the force "Pc".

Furthermore, this rear view mirror assembly includes a spherical ball portion disposed on an opposite end of the support arm, the ball portion being received within a socket portion of the rear view mirror.

Therefore, this rear view mirror can be adjusted to its angle through the spherical ball portion and the socket portion of the rear view mirror. However, the range of the adjustment of this rear view mirror is rather small, because this rear view mirror includes only one adjustment device. In addition, it is necessary for a worker to insert the nut of the spring into the hole of the support arm and then fix the support arm on the spring by the bolt so that installation is cumbersome and time consuming.

Another adjustment device disposed between a windshield header and a support arm of a rear view mirror is disclosed in U.S. Patent No. 3 575 375.

In this U.S. Patent 3 575 375, the rear view mirror assembly includes a first adjustment device and a second adjustment device. The first adjustment device includes a clamping plate and a spherical ball on one end of the support arm. The second adjustment device includes a stud adjustably mounted on an opposite end of the support arm. The rear view mirror is mounted on the stud. Thus, this rear view mirror assembly can be adjusted to a wide range of angular positions by the first adjustment device and the second adjustment device.

Further, the ball on the support arm has a V-shaped notch so that the support arm can break away from the clamping plate when an excessive force is applied to the rear view mirror by rotating the support arm about the spherical ball. However, during assembly, it is necessary for a worker to pay attention to the desired distance between a mounting bracket for the entire assembly and the clamping plate, because the support arm cannot break away when a less than desired distance is defined between the mounting bracket and the clamping plate. It is further noted that the support arm cannot mount on the windshield header when a greater than desired distance is defined between a mounting bracket and the clamping plate. Thus, the device disclosed in the '375 patent is relatively difficult to assemble.

A rear view mirror having an adjustment device which is disposed between a body member of a vehicle and the rear view mirror is disclosed in U.S. Patent 3 471 115. This adjustment device includes a semi-spherical socket portion and a spring. The semi-spherical socket portion engages frictionally with a ball end of a support arm for the rear view mirror, and a spring biases the ball end into engagement with the semi-spherical socket portion. The rear view mirror can move universally about the adjustment device when a force is applied thereto. However, the rear view mirror cannot break away from its mounting bracket under an excessive force because the support arm of the rear view mirror is connected to the mounting bracket through the spring.

U.S. Patent No. 3 425 657 discloses a rear view mirror assembly having a ball and socket joint. The ball includes a plurality of projections mating within grooves in the socket. The rear view mirror assembly, however, cannot break away from the windshield.

The present invention has been developed in view of the foregoing background and to overcome the foregoing drawbacks. It is accordingly an object of this invention to provide a rear view mirror assembly which is able to break away from a windshield, when more than a predetermined amount of a force is applied to the rear view mirror assembly in all directions of the rear view mirror assembly, and has a temporary engagement device which enables a worker to easily install a first unit of the rear view mirror assembly on a body member of a vehicle.

It is another object of the invention to provide a rear view mirror assembly which is able to be adjusted universally to a wide range of angular positions.

Further, it is another object of the invention to provide a rear view mirror assembly which is relatively easier to assemble by enabling a worker to disregard a distance which is defined between a second ball member and a spring of the rear view mirror assembly, when the rear view mirror assembly is installed on the windshield. To this end, a rear view mirror in accordance with the present invention is characterized by the features specified in the characterizing portions of Claims 1, 6 and 9.

In order to accomplish the above-described objects, a rear view mirror assembly according to the present invention includes a base member, a spring and a first unit of the rear view mirror assembly. The first unit of the rear view mirror assembly includes a mounting member, a support arm, a second ball member, a bolt and a rear view mirror. The base member is preferably cemented to a windshield of a vehicle, and the base member has a hook and a mounting portion thereon. The spring is mounted on the hook of the base member and has an engagement device for securing the first unit to the spring.

The mounting member is disposed on the mounting portion of the base member, and includes a first socket portion and a first aperture thereon. The first aperture is opened in the first socket portion. The support arm includes an outer surface and an inner surface on an end thereof. The outer surface of the support arm is slidably mounted on the first socket portion of the mounting member, and the inner surface of the support arm includes a second socket portion. A second aperture having an inner peripheral edge is opened in both of the second socket portion of the inner surface and the outer surface. The rear view mirror is rotatably mounted on an opposite end of the support arm.

The second ball member includes a protrusion and an upper ball surface, and the protrusion of the second ball member is inserted into the second aperture of the support arm. The protrusion of the second ball member is in contact with the inner peripheral edge of the support arm, so that the protrusion temporarily prevents the support arm from moving on the upper ball surface of the second ball member. The second ball member is connected to an end of the bolt, and the bolt is inserted into the second aperture of the support arm and first aperture of the mounting member.

Therefore, the first unit of the rear view mirror assembly is temporarily united by the bolt and protrusion of the second ball member, so that it is not necessary for a worker to install the components on the body member piece by piece. Further, the protrusion restrains relative movement among the components of the first unit when the first unit is attached to the spring. Assembly and installation of the components are thus facilitated.

When the end of the bolt is engaged with the engagement device of the spring, the spring is combined with the first unit to form a second unit of the rear view mirror assembly. The spring can support a predetermined amount of the downward vertical force on the hook of the base member, so that the second unit of the rear view mirror assembly can break away from the base member, when more than the predetermined amount of the downward vertical force is applied thereto.

Further, the engagement device of the spring has an inner end therein, so that the inner end prevents the bolt from being inserted more than a predetermined length. Therefore, a length defined between the engagement device and the second ball member is constant. Accordingly, it is not necessary of a worker to pay any attention to the length during assembly.

A diameter of the second aperture of the support arm is longer than a diameter of both the first aperture of the mounting member, so that the support arm can rotate about the bolt, and the support arm is capable of being universally adjusted to any angle in a wide range of angles.

The above objects, features and advantages of the present invention will become more apparent from the description of the invention which follows, taken in conjunction with the accompanying drawings, wherein like reference numerals denote like elements, and wherein:

Fig. 1 is a perspective view showing a rear view mirror assembly according to the present invention;

Fig. 2 is an enlarged cross-sectional view of the rear view mirror assembly of a first embodiment, taken along the line II—II in Fig. 1;

Fig. 3 is an enlarged perspective view showing components of the rear view mirror assembly shown in Fig. 1 in a disassembled condition;

Fig. 4 is a cross-sectional view of the rear view mirror assembly of Fig. 2, which shows the support arm rotated about a central rotational point 17 of the rotation of the support arm in the clockwise direction in Fig. 2, when a force "$F_1$" is applied to the support arm in the horizontal direction in Fig. 2;

Fig. 5 is a cross-sectional view of the rear view mirror assembly of Fig. 2, which shows the support arm rotated about the central point 17 of the rotation of the support arm in the clockwise direction in an amount greater than the condition which is shown in Fig. 4;

Fig. 6 is a cross-sectional view of the rear view mirror assembly of Fig. 2, which shows the force "$F_1$" applied to the support arm along the line connecting the central point 17 of the rotation of the support arm to a central point for of the rotation of the rear view mirror;

Fig. 7 is a cross-sectional view of the rear view mirror assembly of Fig. 2, which shows the support arm rotated about a contact point 27 between a mounting member and a base member in the clockwise direction;

Fig. 8 is an enlarged cross-sectional view of the rear view mirror assembly of a second embodiment, taken along the line II—II in Fig. 1;

Fig. 9 is an enlarged cross-sectional view of the rear view mirror assembly of a third embodiment, taken along the line II—II in Fig. 1;

Fig. 10 is an enlarged cross-sectional view of a second ball member of the third embodiment; and

Fig. 11 is an enlarged top view of the second ball member of Fig. 10.

The present invention will be described in detail with reference to the accompanying drawings which illustrate different embodiments according to the present invention.

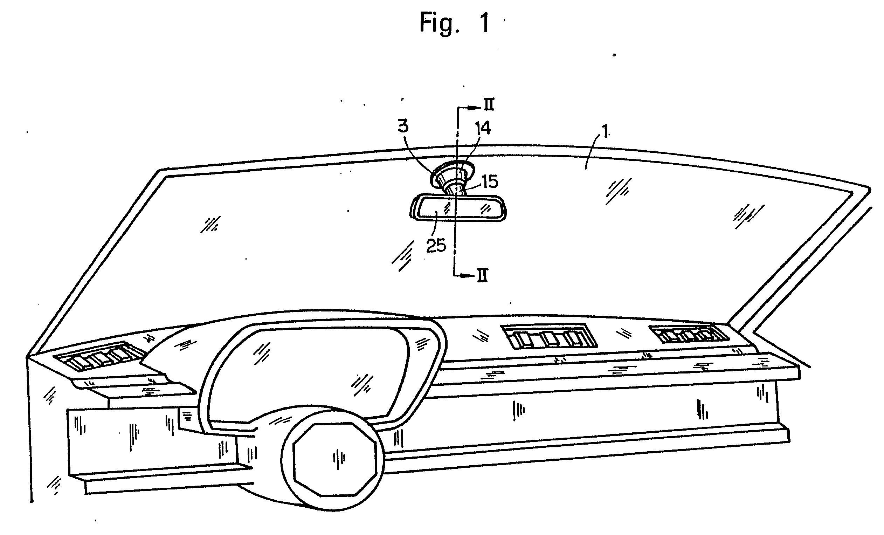

Referring to Figure 1, a rear view mirror assembly is disposed at an upper central portion of a windshield 1 of a vehicle. A rear view mirror 25 is rotatably mounted on an inner surface of the windshield 1 through a support arm 15, a mounting member 14 and a first base member 3.

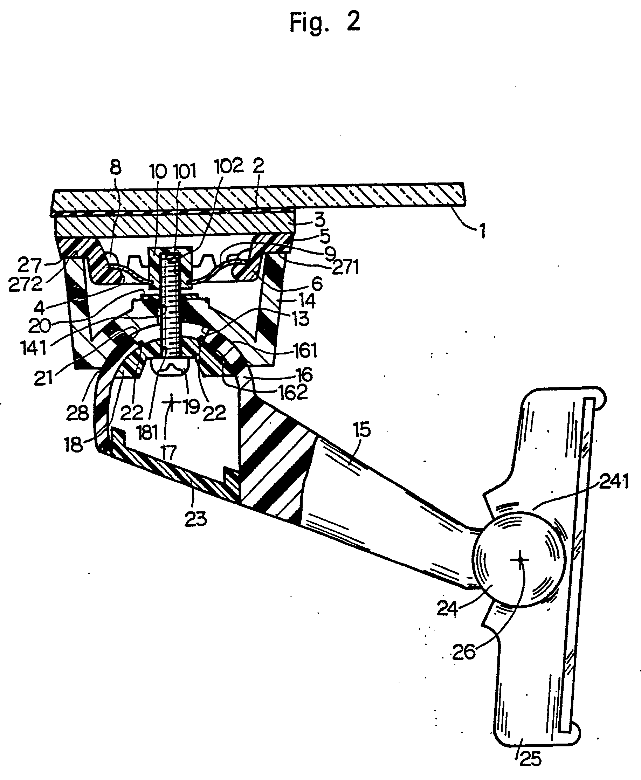

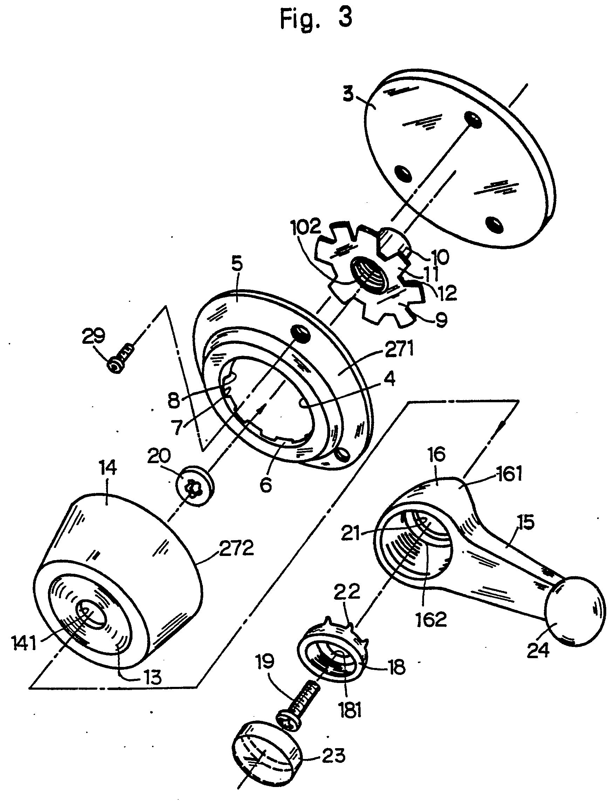

As shown in Figure 2 and Figure 3, the first base member 3 is cemented by an adhesive 2 to the windshield 1. The first base member 3 includes a plurality of screw holes therein, and a second base member 5 is fixed on the first base member 3 by a corresponding plurality of screws 29.

The second base member 5 includes a mounting portion 271 which is disposed in the vicinity of an outer peripheral edge thereof, and is on a substantially flat horizontal surface. A hook 6 extends from an inner portion of the mounting portion 271. The hook 6 has an inner peripheral edge and an upper surface, the inner peripheral edge defining an opening 4 within the second base member 5. The upper surface of the hook 6 has a plurality of second projections 8 and a plurality of second recesses 7 thereon.

A spring 9 is defined within the opening 4 of the second base member 5. The spring 9 includes a cap 10, a plurality of first projections 11 and a plurality of first recesses 12. The cap 10 is fixed at a central portion of the spring 9, and includes a cavity 102 with an inner end 101 therein. The cavity 102 of the cap 10 includes a screw hole therein.

The plurality of first projections 11 of the spring 9 extend outwardly in its radial direction, and engage with the plurality of second recesses 7 of the second base member 5. Therefore, the spring 9 engages securely with the second base member 5, so that the spring 9 cannot rotate in the opening 4 of the second base member 5. Further, the spring 9 can support a predetermined amount of a downward vertical force so that the spring 9 can break away from the hook 6, when more than the predetermined amount of the downward vertical force is applied to the spring 9.

The mounting member 14 is disposed on the mounting portion 271 of the second base member 5. The mounting member 14 includes an upper peripheral edge 272 and a first socket portion 13. The upper peripheral edge 272 is in contact with the mounting portion 271 of the second base member 5, and the first socket portion 13 of the mounting member 14 is formed in a lower surface of the mounting member 14. The first socket portion 13 is formed in a semi-spherical concave shape, and has a first aperture 141 at the central portion of the mounting member 14. A diameter of the first aperture 141 is slightly greater than a diameter of the bolt 19.

The support arm 15 is pivotally mounted on the first socket portion 13 of the mounting member 14. The support arm 15 has an opposite end 24. The end 16 of the support arm 15 includes an outer surface and an inner surface. The outer surface of the support arm 15 has a first ball portion 161 thereon formed in a semi-spherical convex shape. The first ball portion 161 is mounted on the first socket portion 13 of the mounting member 14. The inner surface of the support arm 15 includes a second socket portion 162 which is formed in a semi-spherical concave shape. The inner surface of the support arm 15 defines a recess within the end 16 of the support arm 15, and a second aperture 21 is opened between the second socket portion 162 of the inner surface of the support arm 15 and the first ball portion 161 on the outer surface of the support arm 15. The second aperture 21 has an inner peripheral edge. A diameter of the second aperture 21 is greater than the diameter of the first aperture 141 of the mounting member 14.

A curved or second ball member 18 having an upper semi-spherical convex surface is slidably mounted on the second socket portion 162 of the supporting arm 15. The second ball member 18 has a third aperture 181. A plurality of protrusions 22 are provided on the convex surface of the second ball member 18. The plurality of protrusions 22 are disposed within the second aperture 21 of the support arm 15, and each protrusion 22 is in contact with the inner peripheral edge of the support arm 15. Preferably, at least three protrusions 22 are disposed on the upper semi-spherical convex surface, each protrusion 22 being formed in a semi-spherical convex shape. The protrusions 22 are normally located within the inner peripheral edge of the second aperture 21 to temporarily prevent the support arm 15 from moving on the upper semi-spherical surface of the second ball member 18.

A bolt 19 is provided for securing the various components together. The bolt 19 includes a head portion on an end thereof adjacent the second ball member 18. The opposite end of the bolt 19 is inserted into the cavity 102 in the cap 10 of the spring 9. An intermediate shank portion of the bolt 19 extends through the third aperture 181 of the second ball member 18, the second aperture 21 of the support arm 15, and the first aperture 141 of the mounting member 14. A diameter of the second aperture 21 is greater than the diameter of the first aperture 141 and the third aperture 181, so that the support arm 15 is supported for universal movement. That is, the support member 15 can rotate about the vertical axis of the bolt 19 (Fig. 2), the protrusion 22 rotating within the second aperture 21 when a sufficient turning force is applied. The support member 15 can also rotate about a central point 17 (Fig. 2) of the support arm 15 to an extent defined by the inner peripheral edge of the second aperture 21. Rotation about the central point 17 requires a sufficient turning force to be applied such that the inner surface of the support arm 15 rides over the protrusions 22. However, during assembly, the protrusions 22 temporarily prevent relative rotation among the components of the first unit to facilitate assembly.

The opposite end of the bolt 19 is inserted into the cavity 102 of the cap 10 on the spring 9. The opposite end of the bolt 19 is prevented from being inserted into the cavity 102 of the cap 10 more than a predetermined length by the inner end 101 of the cap 10, so that a bolt length defined between the cap 10 and the head portion of the bolt 19 is constant. The bolt length between the cap 10 and the head portion of the bolt 19 is greater than a sum of the thicknesses of the mounting member 14 around the first aperture 141, the supporting arm 15 around the second aperture 21, and the second ball member 18 around the third aperture 181. Therefore, the support arm 15 can move along the longitudinal axis of the bolt 19, as well as rotating about a central portion 17 of the support arm 15.

A first unit of the rear view mirror assembly is defined as the mounting member 14, the support arm 15, the second ball member 18 and the bolt 19. Consequently, the first unit of the rear view mirror assembly is temporarily united by the bolt 19 and the plurality of protrusions 22 on the second ball member 18. Accordingly, it is not necessary for a worker to install the components of the rear view mirror assembly on the windshield 1 piece by piece. Rather, the first unit can be installed as a unit described below.

When the opposite end of the bolt 19 is engaged with the screw cavity 102 of the cap 10 of the spring 9, the spring 9 is combined with the first unit of the rear view mirror assembly to form a second unit. The spring 9 may be attached already to the second base member 5. Alternatively, the spring 9 may be attached to the first unit to form the second unit which is then attached to the base member 5. When more than a predetermined amount of downward vertical force is applied to the spring 9, the second unit of the rear view mirror assembly can break away from the second base member 5.

It will be apparent to one skilled in the art that the bolt 19 may be integral with the second ball member 18, or be screw or rod.

The recess of the support arm 15 opens downward in a lower portion of the support arm 15, and a cover 23 is disposed within the recess. Therefore, the cover 23 covers the recess and improves the aesthetic appearance of the rear view mirror assembly.

The opposite end of the support arm 15 includes a ball portion 24, and the ball portion 24 formed in a spherical ball shape. The ball portion 24 is rotatably received in a spherical socket portion 241 which is defined within the rear view mirror 25.

A washer 20 is disposed between the cap 10 and the mounting member 14. Preferably, the washer 20 is made of synthetic resin. The washer 20 includes a hole therein which is slightly smaller than a diameter of the bolt 19. Therefore, the washer 20 prevents the bolt 19 from moving easily in the hole of the washer 20, once the bolt 19 is inserted into the hole of the washer 20. Further, the washer 20 and the bolt 19 can unit temporarily the first unit (which includes the mounting member 14, the support arm 15 and the second ball member 18) such that it is easy for a worker to install the first unit of the rear view mirror assembly on the spring 9 which may already be mounted on the second base member 5.

As shown in Figure 2, the plurality of protrusions 22 of the second ball member 18 are normally disposed in the second aperture 21 of the support arm 15, so that the plurality of protrusions 22 normally prevent the rotation of the support arm 15 about the central point 17. Therefore, it is convenient for a worker to install the first unit of the rear view mirror assembly on the spring 9, because these components of the first unit cannot change their positions due to the interlocked relation between the protrusions 22 and the second aperture 21 of the support arm 15. That is, the insertion of the protrusions 22 within the second aperture 21 temporarily maintains the components in position during assembly. As noted above, once assembled, the inner surface of the support arm 15 can ride over the protrusions 22 to permit rotation about the central point 17.

Description will be hereunder given of operation of the above-described embodiment.

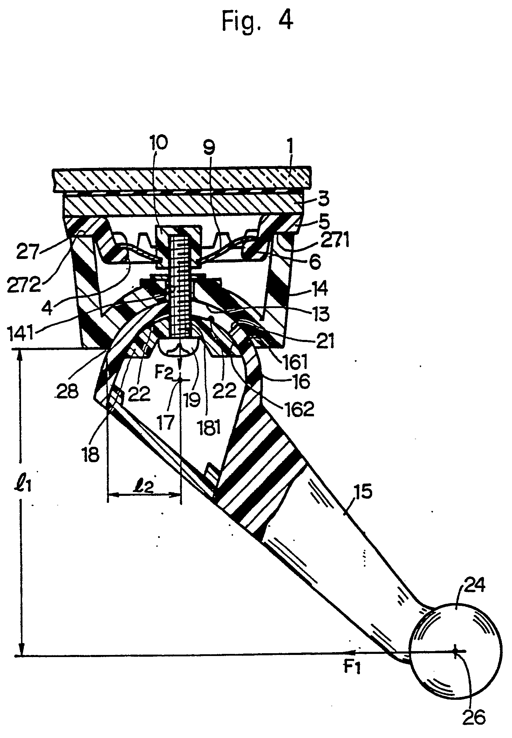

As shown in Figure 4, the inner surface of the support arm 15 can ride on the protrusion 22 of the second ball member 18, when a force "$F_1$" is applied to a central point 26 of the ball end 24 of the support arm 15. As a result of the force "$F_1$", the support arm 15 rotates about a central point 17 of the support arm 15. The intermediate shank portion of the bolt 19 limits the movement of the support arm 15 to rotate within the space defined by the inner peripheral edge of the second aperture 21. That is, the inner peripheral edge of the second aperture 21 contacts the intermediate shank portion of the bolt 19 and thus limits the rotation of the support arm 15 about the central point 17.

When the force "$F_1$" is continuously applied to the support arm 15 in the horizontal direction in Fig. 4, a first moment $M_1$ in the clockwise direction about a point 28 is calculated by a first formula (1) as follows:

$$M_1 = l_1 \cdot F_1 \qquad (1)$$

In this first formula (1), $l_1$ is a vertical length between the point 28 and the central point 26 of the ball end 24 for the rear view mirror 25. The point 28 is defined between the first ball portion 161 of the support arm 15 and an edge of the first socket portion 13 of the mounting member 14.

A second moment "$M_2$" in the clockwise direction about point 28 in Fig. 4 is calculated by the second formula (2) as follows:

$$M_2 = l_2 \cdot F_2 \qquad (2)$$

In the second formula (2), $l_2$ is the horizontal length between point 28 and the bolt 19, and "$F_2$" is a downward vertical force on the bolt 19. The resiliency of the spring 9 resists the force "$F_2$".

For equilibrium, $M_1$ must equal $M_2$. Therefore, the downward vertical force "$F_2$" along the bolt

19, which is applied to the spring 9, is calculated by a third formula (3) as follows:-

$$F_2 = (l_1/l_2) \cdot F_1 \qquad (3)$$

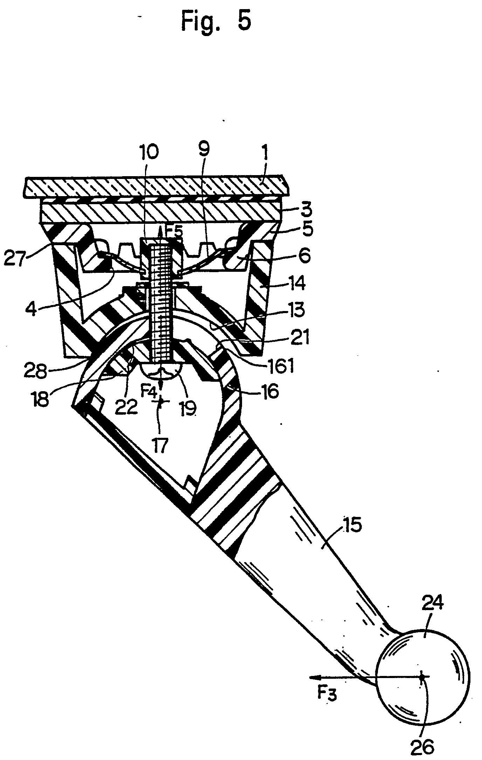

In Figure 5, a force "$F_3$" is applied to the central point 26 and a downward vertical force "$F_4$" is applied to the spring 9. If the force "$F_3$" is larger than the force "$F_1$", and a force "$F_4$" is not larger than the predetermined downward vertical force, the support arm 15 is further rotated about the point 28. The first ball portion 161 of the support arm 15 separates partially from the first socket portion 13 of the mounting member 14, and the support arm 15 is supported by the spring 9. In this condition, the force "$F_4$" is balanced with a bias force "$F_5$" of the spring 9 so that the moments generated about the point 28 are equal. The force "$F_4$" is calculated by a fourth formula (4) as follows:

$$F_4 = (l_1/l_2) \cdot F_3 \qquad (4)$$

Next, if the force "$F_3$" becomes larger, and the force "$F_4$" becomes larger than the predetermined amount of the downward vertical force, the spring 9 can break away from the hook 6 of the second base member 5. Accordingly, the second unit of the rear view mirror assembly can break away when the spring 9 separates from the hook 6.

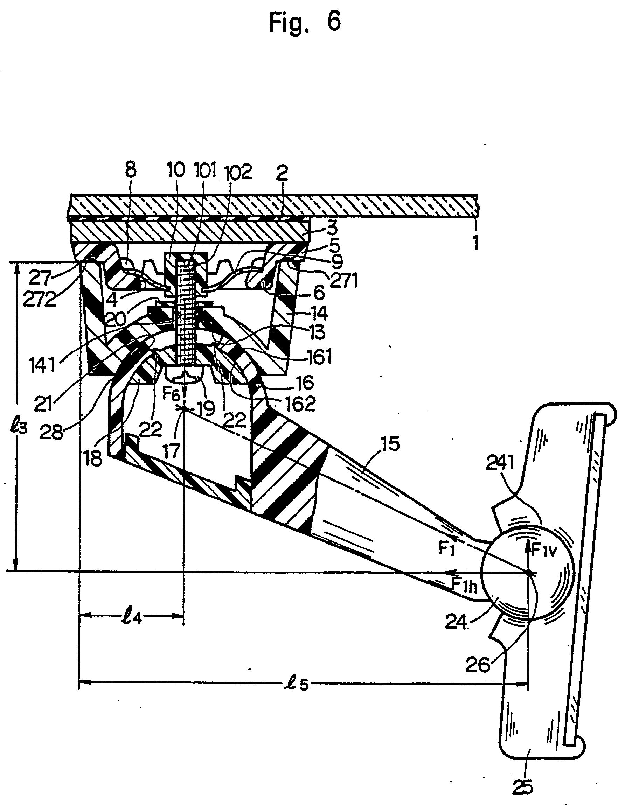

As shown in Figure 6, when the force "$F_1$" is applied to the support arm 15 along the line which connects the central point 26 to the central point 17 of the support arm 15, the support arm 15 cannot be rotated about the central point 17.

However, the vertical and horizontal components $F_{1v}$, $F_{1h}$ of the force $F_1$ cause a third moment $M_3$ in the clockwise direction about a point 27, the point 27 being defined between the mounting portion 271 of the second base member 5 and the upper edge 272 of the mounting member 14. The third moment $M_3$ in the clockwise direction about the point 27 is calculated by a fifth formula (5) as follows:

$$M_3 = l_3 \cdot F_{1h} - l_5 \cdot F_{1v} \qquad (5)$$

In this fifth formula (5), $l_3$ is a vertical length between the point 27 and the central point 26 of the rotation of the rear view mirror 25, and $l_5$ is a horizontal length between the point 27 and the point 26.

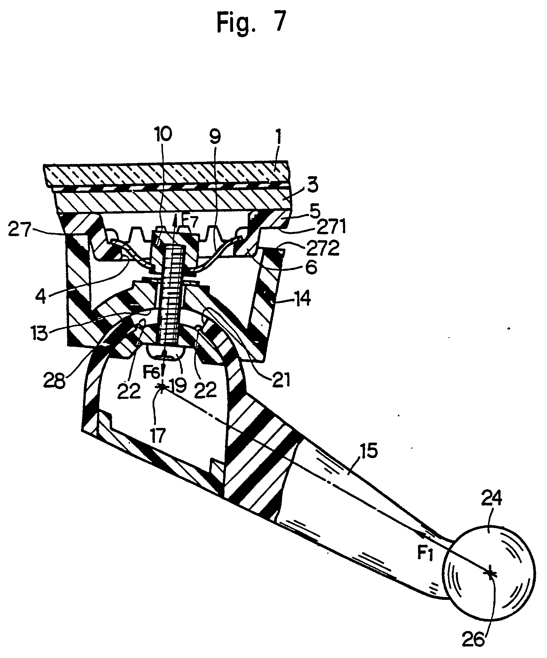

Therefore, as shown in Figure 7, the support arm 15 and the mounting member 14 can be rotated about the point 27, so that the upper edge 272 of the mounting member 14 separates partially from the mounting portion 271 of the second base member 5. In this case, both of the support arm 15 and the mounting member 14 are supported by the spring 9. In Figure 7, a downward vertical force "$F_6$" along the bolt 19 generates a fourth moment $M_4$ in the clockwise direction about the point 27. The fourth moment $M_4$ is calculated by the following sixth formula (6):

$$M_4 = F_6 \cdot l_4 \qquad (6)$$

In this sixth formula (6), $l_4$ is a horizontal length between the point 27 and the bolt 19.

If $M_3$ equals $M_4$, then the force $F_6$ along the bolt 19 is balanced with a bias force "$F_7$" of the spring 9 and calculated by a seventh formula (7) as follows:

$$F_6 = (l_3 \cdot F_{1h} - l_5 \cdot F_{1v})/l_4 = F_7 \qquad (7)$$

Next, if the force "$F_1$" increases and the force "$F_6$" becomes larger than the predetermined amount of the downward vertical force, the spring 9 can break away from the hook 6 of the second base member 5. Therefore, the second unit of the rear view mirror assembly can break away.

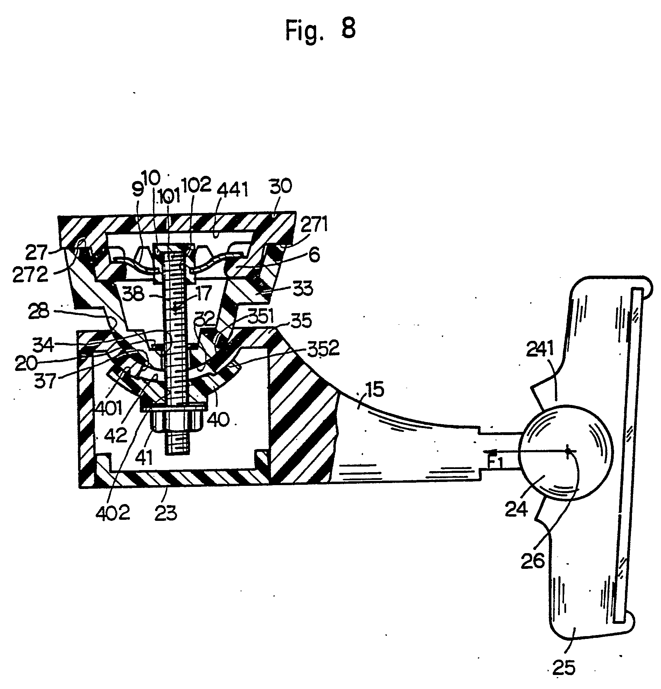

A second embodiment of a rear view mirror assembly is shown in Figure 8. The second embodiment is similar to the first embodiment disclose in Figure 2. However, the second embodiment has several differences disclosed hereunder.

A third base member 30 includes a cavity 441 defined therewithin. A spring 9 is disposed within the cavity 441 of the third base member 30, and is mounted on a hook 6 of the third base member 30. The spring 9 has a cap 10 at a central portion thereof. A bolt 38 engages the cap 10 of the spring 9, and the bolt 38 has a screw thread thereon.

A mounting member 33 includes a third ball portion 32 at a lower surface thereof, and a fourth aperture 34 therein. The fourth aperture 34 is opened in the third ball portion 32, and the bolt 38 is inserted into the fourth aperture 34. The diameter of the fourth aperture 34 is slightly greater than a diameter of the bolt 38. The third ball portion 32 of the mounting member 33 is formed in a semi-spherical convex shape.

A support arm 15 includes an end 35 having an outer surface and an inner surface thereof. A third socket portion 351 is formed on the outer surface of the support arm 15, and the third socket portion 351 is slidably mounted on the third ball portion 32 of the mounting member 33. The third socket portion 351 of the support arm 15 is formed in a semi-spherical socket concave shape, and a fifth aperture 37 is opened in the third socket portion 351 of the support arm 15. A diameter of the fifth aperture 37 of the support arm 15 is greater than a diameter of the fourth aperture 34 of the mounting member 33, and the bolt 38 is inserted into the fifth aperture 37 of the support arm 15. A fourth ball portion 352 is formed in the inner surface of the support arm 15, and has a semi-spherical convex shape. The fifth aperture 37 is opened in the fourth ball portion 352 of the support arm 15.

A fourth socket member 40 is mounted on the fourth ball portion 352 of the support arm. The fourth socket membsr 40 includes an upper semi-spherical concave surface 401 thereon with an inner peripheral edge, and a sixth aperture 402 which is opened in the upper semi-spherical concave surface 401 thereof. A diameter of the sixth aperture 402 of the fourth socket member 40 is smaller than the diameter of the fifth aperture 37 of the support arm 15, and the bolt 38 is inserted into the sixth aperture 402 of the fourth socket member 40, so that the support arm 15 can rotate about the bolt 38 within a space defined between the third ball portion 32 of the mounting member 33 and the upper semi-spherical concave surface 401 of the fourth socket member 40.

A nut 41 is mounted on a lower surface of the fourth socket member 40, and the nut 41 engages with the screw thread of the bolt 38. Therefore, the nut 41 can support the fourth socket member 40, the support arm 15 and the mounting member 33 on the hook 6 of the third base member 30 through the bolt 38 and the spring 9.

A first unit of the rear view mirror assembly includes the nut 41, the fourth socket member 40, the support arm 15, the mounting member 33 and the bolt 38.

Further, the fourth socket member 40 includes a second protrusion 42 on the upper semi-spherical concave surface 401 thereof, and the second protrusion 42 is disposed around the sixth aperture 402 of the fourth socket member 40. Preferably, the second protrusion 42 has a trapezoidal shape and inclined sides with semi-spherical concave surface. The second protrusion 42 of the fourth socket member is normally disposed within the fifth aperture 37 of the support arm 15, so that the support arm 15 cannot rotate easily about a central point 17 of a rotation of the support arm 15, with the inclined sides in contact with the inner peripheral edge of the support arm 15. With this structure, the support arm 15 cannot rotate easily about a central point 17 of a rotation of the support arm 15 since the second protrusion 42 temporarily prevents the rotation of the support arm 15 about the central point 17. However, the fourth ball portion 352 of the support arm 15 can ride over the second protrusion 42 of the fourth socket member 40, when a force "$F_1$" is applied to the support arm 15. The rounded surfaces of the inclined sides of the second protrusion 42 ease the ride of the support arm 15 over the second protrusion 42.

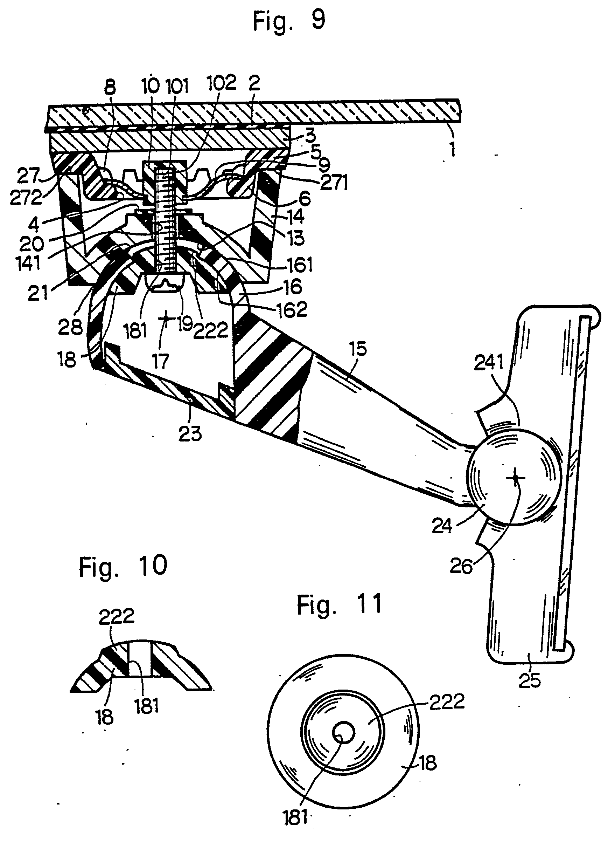

A third embodiment of a rear view mirror assembly is shown in Figures 9—11. The third embodiment is similar to the first embodiment disclosed in Figures 2—7. However, the major difference between the first embodiment and the third embodiment is a second ball member 18.

The second ball member 18 includes a third protrusion 222 on an upper semi-spherical convex surface and is formed in a trapezoidal shape. The third protrusion 222 of the second ball member 18 further includes an inclined side and a round outer peripheral edge. The inclined side of the third protrusion 222 is in contact with an inner peripheral edge of a support arm 15.

Therefore, the third protrusion 222 of the second ball member 18 temporarily prevents the support arm 15 from rotating about a central point 17 of the support arm 15. However, an inner surface 162 of the support arm 15 can ride over the third protrusion 222 of the second ball member 18 by way of the inclined side and the round outer peripheral edge of the third protrusion 222, when a force is applied on the support arm 15.

As described herein, the present invention overcomes the shortcomings or the known art by providing a rear view mirror assembly having a first unit which enables a worker to install the components of the rear view mirror assembly on a windshield of a vehicle in a manner that is relatively easier than prior art installment procedures.

## Claims

1. A rear view mirror assembly of a vehicle comprising a base member (3, 5) secured to a windshield (1) of the vehicle, the base member (3, 5) having a hook (6) and a mounting portion (271) thereon, a spring member (9) mounted on the hook (6) of the base member (3, 5) and having an engaging means (10) thereon, the spring member (9) supporting a predetermined amount of a force on the hook (6) of the base member (3, 5), and a unit of the rear view mirror assembly, characterized in that the unit of the rear view mirror assembly comprises a mounting member (14) having a first end located on the mounting portion (271) of the base member (3, 5), the mounting member (14) having a first aperture (141) and a first socket portion (13) on a second opposite end of the mounting member (14), the first socket portion (13) disposed around the first aperture (141), a support arm (15) having a first end (16) with an outer surface (161) and an inner surface, and an opposite second end (24) on which a rear view mirror (25) is rotatably mounted, the outer surface (161) of the support arm (15) mounted slidably on the first socket portion (13) of the mounting member (14), the inner surface of the support arm (15) having a second socket portion (162), a second aperture (21) extending from the second socket portion (162) of the inner surface to the outer surface (161) of the support arm (15), an inner peripheral edge defining the second aperture (21), a diameter of the second aperture (21) of the support arm (15) being greater than a diameter of the first aperture (141) of the mounting member (14), a second ball member (18) mounted slidably on the second socket portion (162) of the support arm (15), the second ball member (18) having a protrusion (22) thereon disposed within the second aperture (21) of the support arm (15), and an engagement member (19) inserted into the second aperture (21) of the support arm (15) and the first aperture (141) of the mounting member (14), the engagement member (19) having a first end engaging with the engagement means (10) of the spring member (9) and an opposite end connected to the second ball member (18), the engagement member (19) supporting the second ball member (18), the support arm (15) and the mounting member (14) on the base member (3, 5) through the spring member (9), the unit of the rear view mirror assembly being united by the engagement with the protrusion (22) of the second ball member (18) inserted within the second aperture (21) to restrain selectively the support arm (15) from moving on the second ball member (18).

2. A rear view mirror assembly as claimed in claim 1, characterized in that the rear view mirror assembly further comprises a washer (20) disposed between the spring member (9) and the mounting member (14) of the unit of the rear view mirror assembly, the washer (20) engaging the engagement member (19) of the unit to unite the mounting member (14), the support arm (15) and the second ball member (18).

3. A rear view mirror assembly as claimed in claim 2, characterized in that the protrusion (22) of the second ball member (18) includes a plurality of projections (22), and each projection (22) of the second ball member (18) is in contact with the inner peripheral edge of the support arm (15).

4. A rear view mirror assembly as claimed in claim 3, characterized in that each projection (22) of the second ball member (18) has a generally semi-spherical convex shape, whereby the inner surface of the support arm (15) can ride over the projection (22) when a force is applied to the support arm (15).

5. A rear view mirror assembly as claimed in claim 2, characterized in that the protrusion (22) of the second ball member (18) has a generally trapezoidal shape with a generally semi-spherical convex upper surface.

6. A rear view mirror assembly for a vehicle comprising a base member (30) secured to a body member of the vehicle, the base member (30) having a hook (6) and a mounting portion (271) thereon, a spring member (9) mounted on the hook (6) of the base member (30) and having a first engagement device (10) thereon, the spring member (9) supporting a predetermined amount of a downward vertical force on the hook (6) of the base member (30), and a unit of the rear view mirror assembly, characterized in that the unit of the rear view mirror assembly comprises a mounting member (33) having an upper surface disposed on the mounting portion (271) of the base member (30), the mounting member (33) having a first aperture (34) and a first ball portion (32), the first ball portion (32) disposed around the first aperture (34) on a bottom surface of the mounting member (33), a support arm (15) having a first end (35) with an outer surface (351) and an inner surface, and a second opposite end (24) on which a rear view mirror (25) is rotatably mounted, the outer surface (351) of the support arm (15) mounted slidably on the first ball portion (32) of the mounting member (33), the inner surface of the support arm (15) having a second ball portion (352), a second aperture (37) of the support arm (15) extending from the second ball portion (352) of the inner surface to the outer surface (351) of the support arm (15), a diameter of the second aperture (37) being greater than the diameter of the first aperture (34) of the mounting member (33), the second aperture (37) of the support arm (15) being defined by an inner peripheral edge of the support arm (15), a second socket member (40) mounted slidably on the second ball portion (352) of the support arm (15), the second socket member (40) having a protrusion (42) thereon disposed within the second aperture (37) of the support arm (15), an engagement member (38) inserted into the second aperture (37) of the support arm (15) and the first aperture (34) of the mounting member (33), an end of the engagement member (38) engaging with the first engagement device (10) of the spring member (9), and a second engagement device (41) disposed on the second socket member (40), the second engagement device (41) engaging with an opposite end of the engagement member (38), the second engagement device (41) supporting the second socket member (40), the support arm (15) and the mounting member (33) on the base member (30) through the spring member (9) and the engagement member (38), the unit of the rear view mirror assembly being united by the engagement member (38) with the protrusion (42) of the second socket member (40) located within the second aperture (37) to restrain temporarily the support arm (15) from moving on the second socket member (40) during assembly.

7. A rear view mirror assembly as claimed in claim 6, characterized in that the rear view mirror assembly further comprises a washer (20) disposed between the spring member (9) and the mounting member (33) of the unit of the rear view mirror assembly, the washer (20) engaging with the engagement member (33) of the unit to unite the mounting member (33), the support arm (15), the second socket member (40), the engagement member (38) and the second engagement device (41).

8. A rear view mirror assembly as claimed in claim 7, characterized in that the protrusion (42) of the second socket member (40) has a generally trapezoidal shape and an upper generally semi-spherical concave surface.

9. A rear view mirror assembly having a unit for installation on a base member (3, 5) which is fixed on the body member of a vehicle, the rear view mirror assembly comprising the base member (3, 5) having a hook (6) and a mounting portion (271), the hook (6) disposed on an inner peripheral edge thereof, the mounting portion (271) disposed in the vicinity of an outer peripheral edge thereof, a spring member (9) mounted on the hook (6) of the base member (3, 5) and having a cap (10), the spring member (9) supporting a predetermined amount of a downward vertical force on the hook (6) of the base member (3, 5), and the unit of the rear view mirror assembly, characterized in that the unit of the rear view mirror assembly comprises a mounting member (14) disposed on the mounting portion (271) of the base member (3, 5), the mounting member (14) having a first aperture (141) and a first socket portion (13), the first socket portion (13) disposed on a bottom surface of the mounting member (14), a support arm (15) having a first ball portion (161), a second aperture (21) and a second socket portion (162), the first ball portion (161) disposed on an outer surface of an end (16) of the support arm (15), the first ball portion (161) mounted slidably on the first socket portion (13) of the mounting member (14), the second socket member (162) disposed on an inner surface of the end (16) of the support arm (15), the second aperture (21) extending from the second socket portion (162) of the support arm (15) to the first ball portion (161) of the support arm (15), a diameter of the second aperture (21) being greater than a diameter of the first aperture (141) of the mounting member (14), the second aperture (21) of the support arm (15) having an inner peripheral edge therein, a third spherical ball portion (24) disposed on an opposite end of the support arm (15), a rear view mirror (25) having a third spherical socket portion (241) disposed thereon, the third spherical socket portion (241) rotatably receiving the third spherical ball portion (24) of the support arm (15), a second ball member (18) mounted slidably on the second socket portion (162) of the support arm (15), the second ball member (18) having a third aperture (181) and a protrusion (22) thereon, the protrusion (22) of the second ball member (18) disposed within the second aperture (21) of the support arm (15), and an engagement member (19) inserted into the third aperture (181) of the second ball member (18), the second aperture (21) of the support arm (15) and the first aperture (141) of the mounting member (14), a first end of the engagement member (19) engaging with the cap (10) of the spring member (9), an opposite second end of the engagement member (19) having a head portion which supports the second ball member (18), the support arm (15) and the mounting member (14) on the base member (3, 5) through the spring member (9), the unit of the rear view mirror assembly being united by the engagement member (19) with the protrusion (22) of the second ball member (18) located within the second aperture (21) to prevent temporarily the support arm (15) from moving on the second ball member (18).

10. A rear view mirror assembly as claimed in claim 9, characterized in that the rear view mirror assembly further comprises a washer (20) disposed between the spring member (9) and the mounting member (14) of the unit of the rear view mirror assembly, the washer (20) engaging with the engagement member (19) of the unit to unite the mounting member (14), the support arm (15), the second ball member (18) and the engagement member (19).

**Patentansprüche**

1. Rückspiegel-Bausatz eines Fahrzeugs mit einem an einer Windschutzscheibe (1) des Fahrzeugs befestigten Basisteil (3, 5), wobei das Basisteil (3, 5) mit einem Haken (6) sowie einem Befestigungsteil (271) an diesem versehen ist, mit einem am Haken (6) des Basisteils (3, 5) gehaltenen Federelement (9), an dem sich ein Eingriffsstück (10) befindet, wobei das Federelement (9) einen vorbestimmten Anteil einer Kraft am Haken (6) des Basisteils (3, 5) aufnimmt, und mit einer Baueinheit des Rückspiegel-Bausatzes, dadurch gekennzeichnet, daß die Baueinheit des Rückspiegel-Bausatzes umfaßt: ein Halterungsteil (14) mit einem ersten, am Befestigungsteil (271) des Basisteils (3, 5) angeordneten Ende, wobei das Halterungsteil (14) eine erste Öffnung (141) sowie ein erstes Sockelteil (13) an einem zweiten, entgegengesetzten Ende des Halterungsteils (14) aufweist und das erste Sockelteil (13) rund um die erste Öffnung (141) angeordnet ist, einen Tragarm (15), der ein erstes Endstück (16) mit einer Außenfläche (161) sowie einer Innenfläche und ein entgegengesetztes zweites Endstück (24), an dem ein Rückspiegel (25) drehbar gehalten ist, hat, wobei die Außenfläche (161) des Tragarmes (15) gleitend am ersten Sockelteil (13) des Halterungsteils (14) gelagert und die Innenfläche des Tragarmes (15) mit einem zweiten Sockelteil (162) versehen ist, eine zweite Öffnung (21), die sich vom zweiten Sockelteil (162) der Innenfläche zur Außenfläche (161) des Tragarmes (15) erstreckt, wobei ein Innenumfangsrand die zweite Öffnung (21) begrenzt und ein Durchmesser der zweiten Öffnung (21) des Tragarmes (15) größer ist als ein Durchmesser der ersten Öffnung (141) des Halterungsteils (14), ein zweites, gleitend am zweiten Sockelteil (162) des Tragarmes (15) gelarertes Kugelelement (18), das mit einem innerhalb der zweiten Öffnung (21) des Tragarmes (15) angeordneten Vorsprung (22) versehen ist, und ein in die zweite Öffnung (21) des Tragarmes (15) sowie die erste Öffnung (141) des Halterungsteils (14) eingesetztes Verbindungselement (19) mit einem ersten, mit dem Eingriffsstück (10) des Federelements (9) in Eingriff befindlichen Ende sowie mit einem entgegengesetzten Ende, das mit dem zweiten Kugelelement (18) verbunden ist, wobei das Verbindungselement (19) das zweite Kugelelement (18), den Tragarm (15) sowie das Halterungsteil (14) am Basisteil (3, 5) durch das Federelement (9) lagert und die Baueinheit des Rückspiegel-Bausatzes durch den Eingriff mit dem Vorsprung (22) des zweiten Kugelelements (18), der in die zweite Öffnung (21) eingesetzt ist, um in ausgewählter Weise den Tragarm (15) gegen eine Bewegung am zweiten Kugelelement (18) zu beschränken, vereinigt wird.

2. Rückspiegel-Bausatz nach Anspruch 1, dadurch gekennzeichnet, daß der Rückspiegel-Bausatz des weiteren eine zwischen dem Federelement (9) sowie dem Halterungsteil (14) der Baueinheit des Rückspiegel-Bausatzes angeordnete Ringscheibe (20) umfaßt, die mit dem Verbindungselement (19) der Baueinheit in Eingriff kommt, um das Halterungsteil (14), den Tragarm (15) und das zweite Kugelelement (18) zu vereinigen.

3. Rückspiegel-Bausatz nach Anspruch 2, dadurch gekennzeichnet, daß der Vorsprung (22) des zweiten Kugelelements (18) eine Mehrzahl von vorspringenden Teilen (22) umfaßt und jedes vorspringende Teil (22) des zweiten Kugelelements (18) mit dem Innenumfangsrand des Tragarmes (15) in Berührung ist.

4. Rückspiegel-Bausatz nach Anspruch 3, dadurch gekennzeichnet, daß jedes vorspringende Teil (22) des zweiten Kugelelements (18) eine allgemein halbkugelige, konvexe Gestalt hat, wodurch die Innenfläche des Tragarmes (15) über das vorspringende Teil (22), wenn auf den Tragarm (15) eine Kraft aufgebracht wird, rutschen kann.

5. Rückspiegel-Bausatz nach Anspruch 2, dadurch gekennzeichnet, daß der Vorsprung (22) des zweiten Kugelelements (18) eine allgemein trapezförmige Gestalt mit einer allgemein halbkugeligen, konvexen oberen Fläche hat.

6. Rückspiegel-Bausatz für ein Fahrzeug mit einem an einem Aufbauteil des Fahrzeugs befestigten Basisteil (30), das einen Haken (6) sowie ein Befestigungsteil (271) an diesem aufweist, mit einem am Haken (6) des Basisteils (30) gehaltenen Federelement (9), an dem sich eine erste Verbindungseinrichtung (10) befindet, wobei das Federelement (9) einen vorbestimmten Anteil einer abwärtigen, vertikalen Kraft am Haken (6) des Basisteils (30) aufnimmt, und mit einer Baueinheit des Rückspiegel-Bausatzes, dadurch gekennzeichnet, daß die Baueinheit des Rückspiegel-Bausatzes umfaßt: ein Halterungsteil (33) mit einer oberen, am Befestigungsteil (271) des Basisteils (30) angeordneten Fläche, wobei das Halterungsteil (33) eine erste Öffnung (34) sowie ein erstes Kugelelement (32) aufweist und das erste Kugelelement (32) rund um die erste Öffnung (34) an einer unteren Fläche des Halterungsteils (33) angeordent ist, einen Tragarm (15) mit einem ersten Endstück (35) mit einer Außenfläche (351) sowie einer Innenfläche, und mit einem zweiten, entgegengesetzten Endstück (24), an dem ein Rückspiegel (25) drehbar gehalten ist, wobei die Außenfläche (351) des Tragarmes (15) gleitend am ersten Kugelement (32) des Halterungsteils (33) gelagert ist, die Innenfläche des Tragarmes (15) mit einem zweiten Kugelelement (352) versehen ist, eine zweite Öffnung (37) der Tragarmes (15) sich vom zweiten Kugelelement (352) der Innenfläche zur Außenfläche (351) des Tragarmes (15) erstreckt, ein Durchmesser der zweiten Öffnung (37) größer ist als der Durchmesser der ersten Öffnung (34) der Haltergungsteils (33) und die zweite Öffnung (37) der Tragarmes (15) von einem Innenumfangsrand des Tragarmes (15) begrenzt ist, ein zweites, gleitend am zweiten Kugelelement (352) des Tragarmes (15) gelagertes Sockelteil (40), das einen an diesem ausgebildeten, innerhalb der zweiten Öffnung (37) des Tragarmes (15) angeordneten Vorsprung (42) hat, ein in die zweite Öffnung (37) des Tragarmes (15) des Halterungsteils (33) eingesetztes Verbindungselement (38), wobei ein Ende des Verbindungselements (38) mit der ersten Verbindungseinrichtung (10) des Federelements (9) in Eingriff ist, und eine zweite, am zweiten Sockelteil (40) angeordnete Verbindungseinrichtung (41), wobei die zweite Verbindungseinrichtung (41) mit einem entgegengesetzten Ende des Verbindungselements (38) in Eingriff ist, das zweite Sockelteil (40), den Tragarm (15) sowie das Halterungsteil (33) am Basisteil (30) durch das Federelement (9) sowie das Verbindungselement (38) abstützt und die Baueinheit des Rückspiegel-Bausatzes durch das Verbindungselement (38), wobei der Vorsprung (42) des zweiten Sockelteils (40) innerhalb der zweiten Öffnung (37) angeordnet ist, um vorübergehend den Tragarm (15) in einer Bewegung am zweiten Sockelteil (40) während des Zusammenbaus zu beschränken, vereinigt wird.

7. Rückspiegel-Bausatz nach Anspruch 6, dadurch gekennzeichnet, daß der Rückspiegel-Bausatz des weiteren eine zwischen dem Federelement (9) sowie dem Halterungsteil (33) der Baueinheit des Rückspiegel-Bausatzes angeordnete Ringscheibe (20) umfaßt, die mit dem Halterungsteil (33) der Baueinheit des Rückspiegel-Bausatzes in Eingriff kommt, um das Halterungsteil (33), den Tragarm (15), das zweite Sockelteil (40), das Verbindungselement (38) sowie die zweite Verbindungseinrichtung (41) zu vereinigen.

8. Rückspiegel-Bausatz nach Anspruch 7, dadurch gekennzeichnet, daß der Vorsprung (42) des zweiten Sockelteils (40) eine allgemein trapezförmige Gestalt und eine obere, allgemein halbkugelige, konvexe Fläche aufweist.

9. Rückspiegel-Bausatz mit einer Baueinheit für einen Anbau an einem Basisteil (3, 5), das am Aufbau eines Fahrzeugs befestigt ist, wobei der Rückspiegel-Bausatz das Basisteil (3, 5), das einen Haken (6) sowie ein Befestigungsteil (271) hat, wobei der Haken (6) an einem Innenumfangsrand sowie das Befestigungsteil (271) in der Nachbarschaft eines Außenumfangsrandes des Basisteils angeordnet sind, ein am Haken (6) des Basisteils (3, 5) angebrachtes Federelement (9) mit einer Kappe (10), wobei der Federelement (9) einen vorbestimmten Anteil einer abwärtigen, vertikalen Kraft am Haken (6) des Basisteils (3, 5) aufnimmt, und die Baueinheit des Rückspiegel-Bausatzes enthält, dadurch gekennzeichnet, daß die Baueinheit des Rückspiegel-Bausatzes umfaßt: ein am Befestigungsteil (271) des Basisteils (3, 5) angeordnetes Halterungsteil (14) mit einer ersten Öff1ung (141) sowie einem ersten Sockelteil (13), wobei das erste Sockelteil (13) an einer unteren Fläche des Halterungsteils (14) angeordnet ist, einen Tragarm (15) mit einem ersten Kugelabschnitt (161), einer zweiten Öffnung (21) sowie einem zweiten Sockelteil (162), wobei sich der erste Kugelabschnitt (161) an einer Außenfläche eines Endstücks (16) des Tragarmes (15) befindet, der erste Kugelabschnitt (161) gleitend am ersten Sockelteil (13) des Halterungsteils (14) gelagert ist, das zweite Sockelteil (152) an einer Innenfläche des Endstücks (16) des Tragarmes (15) angeordnet ist, die zweite Öffnung (21) sich vom zweiten Sockelteil (162) des Tragarmes (15) zum ersten Kugelabschnitt (161) des Tragarmes (15) erstreckt, ein Durchmesser der zweiten Öffnung (21) größer ist als ein Durchmesser der ersten Öffnung (141) des Halterungsteils (14) und die zweite Öffnung (21) des Tragarmes (15) einen Innenumfangsrand in dieser hat, einen dritten, an einem entgegengesetzten Endstück des Tragarmes (15) angeordneten sphärischen Kugelabschnitt (24), einen Rückspiegel (25) mit einem dritten, sphärischen Sockelteil (241) an diesem, wobei das dritte sphärische Sockelteil (241) drehbar den dritten, spärischen Kugelabschnitt (24) des Tragarmes (15) aufnimmt, ein zweites, gleitend am zweiten Sockelteil (162) des Tragarmes (15) gelagertes Kugelelement (18), wobei das zweite Kugelelement (18) eine dritte Öffnung (181) sowie einen Vorsprung (22) an diesen aufweist und der Vorsprung (22) des zweiten Kugelelements (18) innerhalb der zweiten Öffnung (21) des Tragarmes (15) angeordnet ist, und ein in die dritte Öffnung (181) des zweiten Kugelelements (18), die zweite Öffnung (21) des Tragarmes (15) sowie die erste Öffnung (141) des Halterungsteils (14) eingesetztes Verbindungselement (19), wobei ein erstes Ende des Verbindungselements (19) mit der Kappe (10) des Federelements (9) in Eingriff ist, ein entgegengesetztes zweites Ende des Verbindungselements (19) ein Kopfstück hat, das das zweite Kugelelement (18), den Tragarm (15) sowie das Halterungsteil (14) am Basisteil (3, 5) durch das Federelement (9) lagert, und die Baueinheit des Rückspiegel-Bausatzes durch das Verbindungselement (19), wobei der Vorsprung (22) des zweiten Kugelelements (18) innerhalb der zweiten Öffnunge (21) angeordnet ist, um zeitweise eine Bewegung des Tragarmes (15) am zweiten Kugelelement (18) zu verhindern, vereinigt wird.

10. Rückspiegel-Bausatz nach Anspruch 9, dadurch gekennzeichnet, daß der Rückspiegel-Bausatz des weiteren eine zwischen dem Federelement (9) sowie dem Halterungsteil (14) der Baueinheit des Rückspiegel-Bausatzes angeordnete Ringscheibe (20) umfaßt, die mit dem Verbindungselement (19) der Baueinheit in Eingriff ist, um das Halterungsteil (14), den Tragarm (15), das zweite Kugelelement (18) sowie das Verbindungselement (19) zu vereinigen.

## Revendications

1. Un rétroviseur d'un véhicule comportant une embase (3, 5), fixée à un parc-brise (1) du véhicule, l'embase (3, 5) comprenant un crochet (6) comprenant une partie de monture (271), un ressort (9) monté sur le crochet (6) de l'embase (3, 5) et comprenant un moyen d'emprise (10), le ressort (9) supportant une fraction prédéterminée d'un effort sur le crochet (6) de l'embase (3, 5) et une unité d'un rétroviseur, caractérisé en ce que l'unité du rétroviseur comprend une monture (14) ayant une première extrémité située sur la partie de monture (271) de l'embase (3, 5), la monture (14) ayant une première ouverture (141) et une première partie en manchon (13) sur une seconde extrémité opposée de la monture (14), la première partie en manchon (13) étant disposée autour de la première ouverture (141) un bras support (15) ayant une première extrémité (16) avec une surface extérieure (151) et une surface intérieure et une deuxième extrémité opposée de la monture (24) sur laquelle un rétroviseur (25) est monté rotatif, la surface extérieure (161) du bras support

(15) monté coulissant sur la première partie en manchon (13) de la montur (14), la surface intérieure du bras support (15) ayant une deuxième partie en manchon (162), une deuxième ouverture (21) se prolongeant depuis la deuxième partie en manchon (162) de la surface intérieure, jusqu'à la surface extérieure (161) du bras support (15), un bord périphérique intérieur définissant la deuxième ouverture (21), un diamètre de la deuxième ouverture (21) du bras support (15) étant supérieur à un diamètre de la première ouverture (141) de la monture (14), un deuxième élément à rotule (18) monté coulissant sur la deuxième partie en manchon (162) du bras support (15), le deuxième élément à rotule (18) comportant une protubérance (22) disposée à l'intérieur de la deuxième ouverture (21) du bras support (15), et un élément d'emprise (19) inséré dans la deuxième ouverture (21) du bras support (15) et la première ouverture (141) de la monture (14), l'élément d'emprise (19) ayant une première extrémité en prise avec le moyen d'emprise (10) du ressort (9) et une extrémité opposée reliée au second élément à rotule (18), l'élément d'emprise (19) supportant le deuxième élément à rotule (18) le bras support (15) et la monture (14) sur l'embrase (3, 5) par l'intermédiaire du ressort (9), l'unité de rétroviseur étant attachée par l'emprise à la protubérance (22) du deuxième élément à rotule (18) inséré à l'intérieur de la deuxième ouverture (21) afin de restreindre de façon sélective le déplacement du bras support (15) sur le deuxième élément à rotule (18).

2. Un rétroviseur selon la revendication 1, caractérisé en ce que le rétroviseur comporte en outre une rondelle (20) disposée entre le ressort (9) et la monture (14) de l'unité de rétroviseur, la rondelle (20) engageant l'élément d'emprise (19) de l'unité pour attacher la monture (14), le bras support (15) et le deuxième élément à rotule (18).

3. Un rétroviseur selon la revendication 2, caractérisé en ce que la protubérance (22) du deuxième élément à rotule (18) comporte une pluralité de saillies (22), chaque saillie (22) du deuxième élément à rotule (18) étant en contact avec le bord périphérique intérieur du bras support (15).

4. Un rétroviseur selon la revendication 3, caractérisé e ce que chaque saillie (22) du deuxième élément à rotule (18) a généralement une forme convexe semi-sphérique, ce qui permet à la surface intérieure du bras support (15) de passe au-dessus de la saillie (22) lorsqu'un effort est appliqué au bras support (15).

5. Un rétroviseur selon la revendication 2, caractérisé en ce que la protubérance (22) du deuxième élément à rotule (18) a une forme généralement trapézoidäle avec une surface supérieure généralement convexe et semi-sphérique.

6. Un rétroviseur pour un véhicule comportant une embase (30) fixée à un élément du corps du véhicule, l'embase (30) comprenant un crochet (6) et une partie de monture (271), un ressort (9) monté sur le crochet (6) de l'embase (30) et comprenant un premier dispositif d'emprise (10), le ressort (9) supportant une fraction prédéterminée d'un effort vertical dirigé vers le bas s'exerçant sur le crochet (6) de l'embase (30) et une unité du rétroviseur, caractérisé en ce que l'unité du rétroviseur comporte un élément de monture (33) ayant une surface supérieure disposée sur la partie de monture (271) de l'embase (30), l'élément de monture (33) ayant une première ouverture (34) et une première partie de rotule (32), la première partie de rotule (32) étant disposée autour de la première ouverture (34) sur une surface de fond de l'élément de monture (33), un bras support (15) ayant une première extrémité (35) avec une surface extérieure (351) et une surface intérieure, et une deuxième extrémité (24) opposée sur laquelle un rétroviseur (25) est monté à rotation, la surface extérieure (351) du bras support (15) étant montée coulissante sur la première partie à rotule (32) de l'élément de monture (33) la surface intérieure du bras support (15) ayant une seconde partie de rotule (352), une seconde ouverture (37) du bras support (15) s'étendant depuis la deuxième partie à rotule (352) de la surface intérieure jusqu'à la surface extérieure (351) du bras support (15), un diamètre de la seconde ouverture (37) étant supérieur au diamètre de la première ouverture (34) de l'élément de monture (33), la deuxième ouverture (37) du bras support (15) étant définie par un bord périphérique intérieur du bras support (15), un deuxième élément en manchon (40) étant monté coulissant sur la deuxième partie à rotule (352) du bras support (15), le deuxième élément en manchon (40) comportant une protubérance (42) disposée à l'intérieur de la seconde ouverture (37) du bras support (15), un élément d'emprise (38) étant inséré dans la seconde ouverture (37) du bras support (15) et dans la première ouverture (34) de l'élément de monture (33), une extrémité de l'élément d'emprise (38) étant en prise avec le premier dispositif d'emprise (10) du ressort (9) et un deuxième dispositif d'emprise (41) disposé sur le deuxième élément en manchon (40), le deuxième dispositif d'emprise (41) étant en prise avec une extrémité opposée de l'élément d'emprise (38), le deuxième dispositif d'emprise (41) supportant le second élément en manchon (40) du bras support (15) et l'élément de monture sur l'embase (30) par l'intermédiaire du ressort (9) et de l'élément d'emprise (38), l'unité de rétroviseur étant attachée par l'élément d'emprise (38) avec la protubérance (42) du deuxième élément en manchon (40) situé à l'intérieur de la deuxième ouverture (37) pour restreindre temporairement le déplacement du bras support (15) vers le deuxième élément en manchon (40) en cours d'assemblage.

7. Un rétroviseur selon la revendication 6, caractérisé en ce que le rétroviseur comporte en outre une rondelle (20) disposée entre le ressort (9) et l'élément de monture (33) de l'unité de rétroviseur, la rondelle (20) s'engageant avec l'élément d'emprise (33) de l'unité pour atacher ensemble l'élément de monture (33), le bras support (15), le deuxième élément en manchon (40), l'élément d'emprise (38) et le deuxième dispositif d'emprise (41).

8. Un rétroviseur selon la revendication 7, caractérisé en ce que la protubérance (42) du deuxième élément en manchon (40) a une forme généralement trapézoïdale et une surface supérieure généralement concave et semi-sphérique.

9. Un rétroviseur comportant une unité destinée à son installation sur une embase (3, 5) qui est fixée sur la caisse de véhicule, le rétroviseur comportant l'embase (3, 5) ayant une crochet (6) et une partie de monture (271), le crochet (6) étant disposé sur un bord périphérique intérieure de celle-ci, la partie de monture (271) étant disposée au voisinage d'un bord périphérique extérieur de celle-ci, un ressort (9) monté sur le crochet (6) de l'embase (3, 5) et ayant un capot (10), le ressort (9) supportant une fraction prédéterminée d'un effort vertical vers le bas s'exerçant sur le crochet (6) de l'embase (3, 5) et l'unité de rétroviseur caractérisé en ce que l'unité de rétroviseur comporte une monture (14) disposée sur une partie de monture (271) de l'embase (3, 5), la monture (14) ayant une première ouverture (141) et une première partie en manchon (13), la première partie en manchon (13) étant disposée sur une surface de fond de l'élément de monture (14), un bras support (15) ayant une première partie à rotule (161), une deuxième ouverture (21) et une deuxième partie en manchon (162), la première partie à rotule (161) étant disposée sur une surface extérieure d'une extrémité (16) du bras support (15), la première partie à rotule (161) étant montée coulissante sur la première partie en manchon (13) de l'élément de monture (14), le deuxième élément en manchon (162) étant disposé sur une surface intérieure de l'extrémité (16) du bras support (15), la seconde ouverture (21) se prolongeant depuis la deuxième partie en manchon (162) du bras support (15) jusqu'à la première partie à rotule (161) du bras support (15), un diamètre de la deuxième ouverture (21) étant supérieur au diamètre de la première ouverture (141) de la monture (14), la deuxième ouverture (21) du bras support (15) ayant un bord périphérique intérieur incorporé, une troisième partie à rotule (24) étant disposée sur une extrémité opposée du bras support (15), un rétroviseur (25) ayant une troisième partie en manchon sphérique (241) disposée dessus, la troisième partie en manchon sphérique (241) recevant en rotation la troisième partie à rotule sphérique (24) du bras support (15), un deuxième élément à rotule (18), monté coulissant sur la deuxième partie en manchon (162) du bras support (15), le deuxième élément à rotule (18) ayant une troisième ouverture (181) et portant une protubérance (22), la protubérance (22) du deuxième élément à rotule (18) étant disposée à l'intérieur de la deuxième ouverture (21) du bras support (15) et un élément d'emprise (19) étant inséré dans la troisième ouverture (181) du deuxième élément à rotule (18), la deuxième ouverture (21) du bras supporrt (15) et la première ouverture (14) de l'élément de monture (14), une première extrémité de l'élément d'emprise (19) s'engageant avec le capot (10) du ressort (9), une deuxième extrémité opposée de l'élément d'emprise (19) ayant une partie au sommet qui supporte le deuxième élément à rotule (18), le bras support (15) et l'élément de monture (14) sur l'embase (3, 5) par l'intermédiaire du ressort (9), l'unite du rétroviseur étant attachée par l'élément d'emprise (19) à la protubérance (22) du deuxième élément à rotule (18) situé à l'intérieur de la deuxième ouverture (21) pour empêcher temporairement le déplacement du bras support (15) vers le deuxième élément à rotule (18).

10. Un rétroviseur selon la revendication 9, caractérisé en ce que le rétroviseur comporte en outre une rondelle (20) disposée entre le ressort (9) et l'élément de monture (14) de l'unité de rétroviseur, la rondelle (20) s'engageant avec l'élément d'emprise (19) de l'unité pour attacher l'élément de monture (14), le bras support (15), le deuxième élément à rotule (18) et l'élément d'emprise (19).

Fig. 1

EP 0 169 732 B1

Fig. 2

## Fig. 3

## Fig. 4

# Fig. 5

## Fig. 6

## Fig. 7

Fig. 8

# Fig. 9

# Fig. 10

# Fig. 11